# DEMANDE DE BREVET EUROPEEN

(11) **EP 0 645 267 A1**
(43) Date de publication de la demande: **29.03.1995**
(21) Numéro de dépôt: 94114524.5
(22) Date de dépôt: 15.09.1994
(51) Int. Cl.: B60H 1/00, B60S 1/54

(54) **Dispositif de conditionnement d'air pour véhicules automobiles**

(30) Priorité: 21.09.1993 FR 9311314
(71) Demandeur: SMH Management Services AG, CH-2501 Biel (CH)
(72) Inventeur: Chevroulet, Tristan, CH-2000 Neuchâtel (CH)
(74) Mandataire: Patry, Didier Marcel Pierre

(57) **Abrégé**

L'invention concerne un dispositif de conditionnement d'air d'un habitacle (26) de véhicule automobile comportant un circuit de conditionnement d'air (1) et un mécanisme (2) comprenant des premiers moyens (56,60) pour actionner un volet d'alimentation (40) entre une première position dans laquelle l'air à conditionner fourni au circuit de conditionnement (1) provient de l'extérieur du véhicule, et une deuxième position dite de recyclage, dans laquelle l'air provenant dudit habitacle est réintroduit dans ledit circuit (1), et des deuxièmes moyens (56,58) pour actionner au moins un volet répartiteur (28) de l'air conditionné entre une première position dans laquelle l'air conditionné est transmis principalement à la zone (30) du pare-brise du véhicule, et au moins une deuxième position dans laquelle l'air conditionné est transmis à d'autres zones (32,34) de l'habitacle (26) du véhicule, ledit dispositif étant caractérisé en ce que lesdits premiers et deuxièmes moyens (56,58,60) sont couplés de manière que ledit volet d'alimentation (40) est toujours dans une position différente de sa deuxième position lorsque ledit volet répartiteur (28) est dans la première position.

## Description

La présente invention se rapporte, de manière générale, à un dispositif de conditionnement d'air pour véhicules automobiles et concerne plus particulièrement un tel un dispositif comportant une position de recyclage, pour laquelle l'air introduit dans l'habitacle provient au moins pour une grande partie de l'intérieur et non de l'extérieur du véhicule.

Les dispositifs de conditionnement d'air de certains véhicules comportent, en effet, une position particulière dite de "recyclage" qui permet d'alimenter l'habitacle du véhicule en circuit fermé ou quasi fermé et qui est particulièrement utile lorsque le véhicule traverse des zones polluées, telles les zones urbaines, les zones souterraines, etc. On entend par circuit quasi fermé un circuit de conditionnement d'air permettant la circulation d'une certaine quantité d'air frais, c'est-à-dire provenant de l'extérieur, dans l'habitacle.

De tels dispositifs de conditionnement d'air sont particulièrement utiles dans les véhicules à traction électrique dans lesquels ils permettent de diminuer le consommation d'énergie du système de chauffage de l'habitacle.

Toutefois, l'utilisation de cette position de recyclage présente l'inconvénient de provoquer une augmentation du taux d'humidité de l'air circulant dans l'habitacle en fonction du temps et du nombre de personnes occupant le véhicule. Cette augmentation du taux d'humidité peut se traduire rapidement par un embuage des vitres, et en particulier celui du pare-brise. Dans une telle situation, le conducteur du véhicule, oubliant que le dispositif est en position de recyclage, réagit le plus souvent en actionnant la commande de désembuage/dégivrage. Une telle action, si elle apporte une amélioration passagère, ne permet toutefois pas d'endiguer le phénomène d'augmentation du taux d'humidité qui est dû à la mise en circuit fermé ou quasi fermé du dispositif de conditionnement d'air.

Une autre conséquence d'un trop long maintien dans la position de recyclage est le fait que l'air de l'habitacle, insuffisamment renouvelé, s'appauvrit en oxygène et s'enrichit en humidité et en oxyde de carbone et ce, le plus souvent, à l'insu des occupants, ce qui provoque une baisse des capacités de réaction, des maux de tête, et même la somnolence du conducteur qui peut évidement avoir des conséquences tragiques.

L'invention a donc pour but principal de remédier aux inconvénients de l'art antérieur susmentionné en fournissant un dispositif de conditionnement d'air pour véhicules automobiles qui interdit le maintien de la position de recyclage lorsque la commande de désembuage/dégivrage est activée.

A cet effet l'invention a pour objet un dispositif de conditionnement d'air d'un habitacle de véhicule automobile comportant un circuit de conditionnement d'air et un mécanisme comprenant des premiers moyens pour actionner un volet d'alimentation entre une première position dans laquelle l'air à conditionner fourni au circuit de conditionnement provient de l'extérieur du véhicule, et une deuxième position dite de recyclage, dans laquelle l'air provenant dudit habitacle est réintroduit dans ledit circuit, et des deuxièmes moyens pour actionner au moins un volet répartiteur de l'air conditionné entre une première position dans laquelle l'air conditionné est transmis principalement à la zone du pare-brise du véhicule, et au moins une deuxième position dans laquelle l'air conditionné est transmis à d'autres zones de l'habitacle du véhicule, ledit dispositif étant caractérisé en ce que lesdits premiers et deuxièmes moyens sont couplés de manière que ledit volet d'alimentation est toujours dans une position différente de sa deuxième position lorsque ledit volet répartiteur est dans la première position.

Grâce à ces caractéristiques, le volet d'alimentation en air extérieur est automatiquement ouvert et mis en circuit avec l'habitacle lorsque ledit bouton se trouve dans la position désembuage/dégivrage ce qui élimine tout risque d'embuage et garantit que l'air circulant dans l'habitacle est suffisamant renouvelé.

Selon une caractéristique avantageuse de l'invention, le volet d'alimentation comporte des moyens de fuite pour laisser entrer un débit déterminé d'air frais dans l'habitacle. De préférence, ledit volume déterminé correspond à environ 20 à 30% du volume d'air circulant dans l'habitacle par heure.

Ainsi, même en position de recyclage, un certain volume d'air frais circule dans l'habitacle si bien que les conditions usuelles d'aération d'un habitacle d'une véhicule automobile sont remplies. A titre d'exemple, un débit d'air provenant de l'extérieur de l'ordre de 30 m³ par heure et par personne donne aux occupants du véhicule un confort satisfaisant.

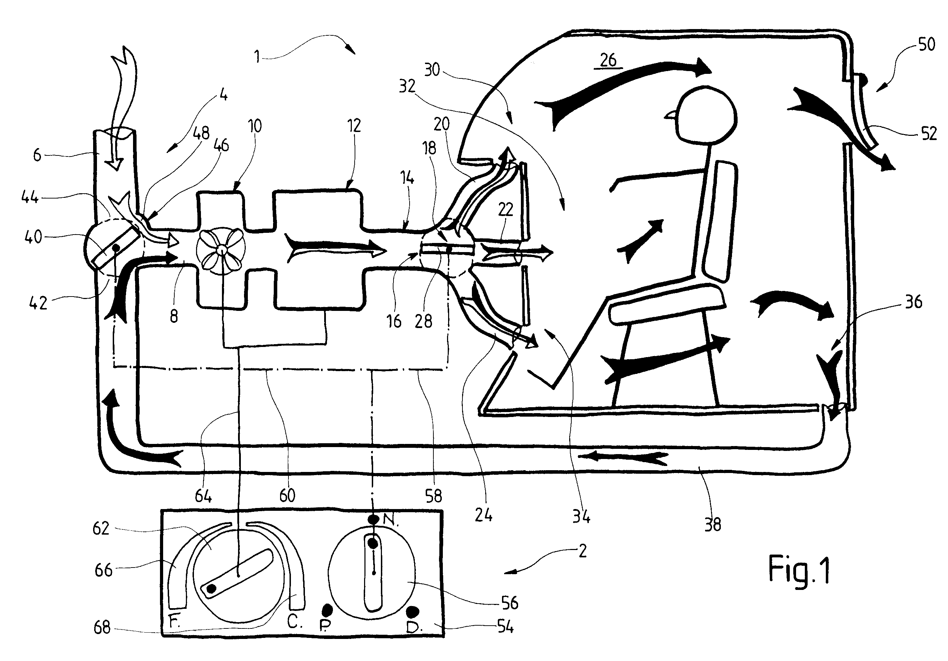

D'autres buts, avantages et caractéristiques de la présente invention apparaîtront plus clairement à la lecture de la description suivante d'un exemple de réalisation particulier, ladite description étant faite à titre purement illustratif et non limitatif en relation avec le dessin annexé dans lequel les figures 1 à 3 montrent respectivement des schémas d'un dispositif de conditionnement d'air d'un véhicule automobile selon l'invention dans des configuration de fonctionnement différentes.

Le dispositif de conditionnement d'air selon l'invention est destiné à conditionner l'air circulant dans l'habitacle d'un véhicule automobile dont seuls les éléments utiles à la compréhension de l'invention ont été représenté.

Ce dispositif de conditionnement comprend essentiellement un circuit de conditionnement d'air 1 associé à un mécanisme de commande 2.

Le circuit de conditionnement 1 comprend une zone d'alimentation 4 en air frais ayant un premier conduit 6 destiné à introduire de l'air frais, c'est-à-dire provenant de l'extérieur du véhicule, dans le circuit de conditionnement 1. La zone d'alimentation 4 est reliée via un conduit 8 comprenant des moyens d'aspiration/soufflage 10, tels qu'un ventilateur, à une zone de conditionnement 12 de l'air dans laquelle l'air provenant du conduit 8 et notamment de l'extérieur du véhicule peut être conditionné. A cet effet, la zone de conditionnement 12 comprend un système de conditionnement (non représenté) comprenant par exemple et de façon classique un filtre, un évaporateur, un volet de chauffage, un échangeur de chaleur ou dans le cas d'une véhicule à traction électrique, un chauffage électrique. Le ventilateur 10 et le dispositif de conditionnement 12 servent à moduler le débit et la température de l'air introduit dans l'habitacle du véhicule.

La zone de conditionnement 12 débouche via un conduit 14 sur une entrée 16 d'une chambre de répartition 18. Des conduits de sortie 20, 22 et 24 connectent la chambre de répartition 18 à l'habitacle 26 du véhicule. Plus précisément, les conduits de répartition 20, 22, et 24 répartissent l'air provenant du conduit 14, en fonction de la position d'un volet de répartition 28, vers, respectivement, une zone du pare-brise 30, une zone médiane de l'habitacle 32 et une zone inférieure de l'habitacle 34. La position du volet de répartition 28 dans laquelle l'air provenant du conduit 14 est dirigé cers la zone 30 du pare-brise est la position dite de désembuage. A titre indicatif, la zone médiane 32 correspond sensiblement à la hauteur du torse des passagers avant et la zone inférieure 34 sensiblement à la hauteur des pieds des passagers. Bien que dans l'exemple décrit, la répartition de l'air provenant de la zone de conditionnement est réalisée à l'aide d'une seul volet de répartition 28, il va de soi que la répartition peut se faire à l'aide de plusieurs volets du type du volet 28 associés respectivement à chaque conduit 20, 22, 24.

Le circuit de conditionnement 1 comprend en outre une zone de récupération 36 de l'air qui circule dans l'habitacle 26. Cette zone de récupération 36 est reliée à un conduit 38 qui forme des moyens pour amener l'air récupéré à partir de l'habitacle 26 vers la zone d'alimentation 4 et boucler le circuit de conditionnement 1.

De préférence, la zone de récupération 36 est disposée dans une partie arrière de l'habitacle 26, par exemple derrière les sièges, pour que l'air récupéré ait circulé dans tout l'habitacle 26.

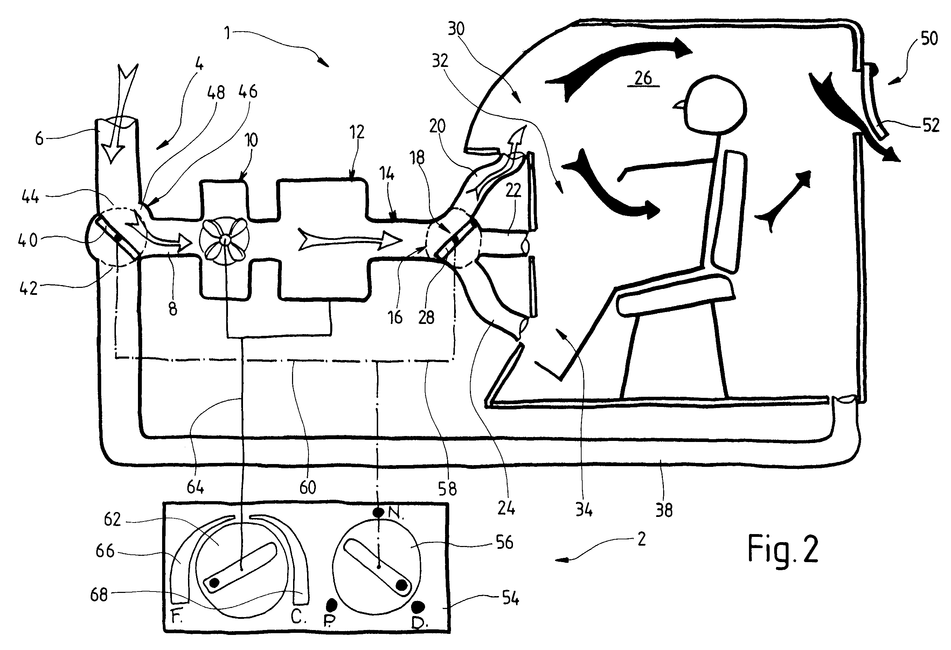

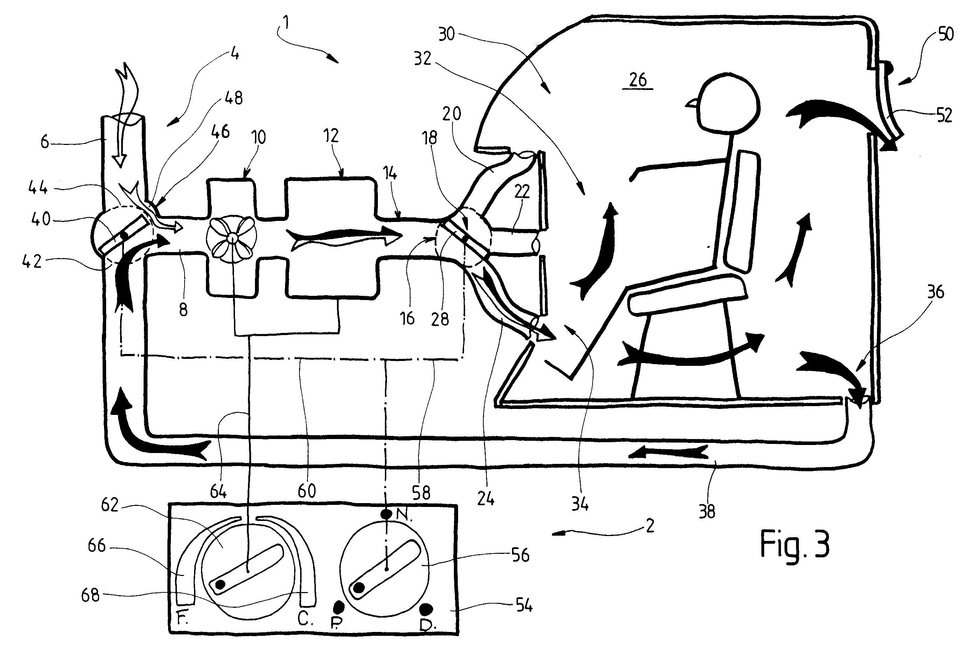

Le circuit des figures 1, 2, et 3 comprend dans sa zone d'alimentation 4 encore un volet d'alimentation 40 destiné à commander l'alimentation en air de la zone de conditionnement 12 soit à partir de l'extérieur avec de l'air frais entrant dans le conduit 6 soit à partir de l'intérieur du véhicule avec de l'air provenant du conduit 38. Le volet 40 est mobile entre, d'une part, une première position dite ouverte (figure 2) dans laquelle il obture l'extrémité 42 du conduit 38 voisine de la zone d'alimentation 4 de sorte que la quasi totalité du volume d'air entrant dans le circuit de conditionnement 1 provient de l'extérieur du véhicule et, d'autre part, une deuxième position dite fermée ou de recyclage (figures 1 et 3) dans laquelle il obture l'orifice 44 du conduit d'alimentation 6 de sorte que la quasi totalité de l'air entrant dans le circuit de conditionnement 1 provient de l'habitacle via le conduit 38 et à travers l'orifice 42.

Selon une caractéristique de l'invention, le volet d'alimentation 40 comporte des moyens de fuite 46 pour laisser entrer un volume déterminé d'air frais dans le circuit de conditionnement 1 lorsqu'il est dans sa position fermée ou de recyclage. Ces moyens de fuite 46 sont formés d'une partie 48 de l'orifice 44 qui, dans l'exemple représenté, ne peut pas être obstruée par le volet 40 mais qui peuvent bien entendu être formés d'un conduit de déviation (non représenté), ou analogue.

A titre d'exemple et pour atteindre un compromis intéressant entre, d'une part, le confort des occupants, et dans le cas d'un véhicule à traction électrique, l'économie d'énergie que l'on peut réaliser dans le mode de recyclage et, d'autre part, la qualité de l'air circulant dans l'habitacle, les moyens de fuite 46 sont aptes à laisser entrer environ 20 à 30% du débit d'air total circulant dans le circuit de conditionnement 1.

En revanche, lorsque le volet 40 est dans sa position ouverte (figure 2) il obture de façon totalement étanche l'orifice 42 du conduit 38. On notera à ce propos que le circuit de conditionnement 1 comprend de façon classique des moyens d'évacuation 50 disposés dans la zone arrière de l'habitacle 26. Ces moyens 50 permettent l'évacuation classique de l'air ayant circulé dans l'habitacle vers l'extérieur du véhicule. Ces moyens d'évacuation on été symbolisés au dessin par un clapet formé d'une membrane souple 52 pouvant s'ouvrir en cas de surpression dans l'habitacle 26.

Le mécanisme de commande 2 est associé à un panneau de commande 54 qui comporte les commandes du dispositif de conditionnement d'air du véhicule de l'invention. Le panneau 54 comprend un premier bouton de commande 56 du volet de répartition 28 présentant trois positions repérées respectivement par les lettres P, N et D sur le panneau 54 et correspondant chacune à une position du volet 28. En particulier, lorsque le bouton 56 est en regard de la lettre P, le volet 28 a une position telle que l'air entrant dans l'habitacle 28 n'est dirigé que vers les pieds des passagers, lorsque que le bouton 54 est en regard de la lettre N, le volet 28 a une position telle que l'air entrant dans l'habitacle 26 est réparti uniformément vers la zone du pare-brise, vers la zone médiane de l'habitacle et vers les pieds des passagers et lorsque le bouton 56 est en regard de la lettre D, le volet 28 a sa position de désembuage, c'est-à-dire une position telle que l'air entrant dans l'habitacle 26 n'est dirigé que vers le pare-brise. Pour ce faire, le bouton 56 commande le volet de répartition 28 via des moyens de liaison 58 dans le but d'orienter l'air conditionné vers les zones haute, médiane ou basse de l'habitacle.

Selon l'invention, le bouton de commande 56 est également relié à des moyens de liaison 60 du volet d'alimentation 40 de sorte que les moyens de liaison 58 du volet de répartition 28 sont couplés fonctionnellement aux moyens de liaison 60 du volet d'alimentation 40 pour que, lorsque le volet de répartition 28 est dans sa position de désembuage, le volet d'alimentation 40 soit dans sa position ouverte (figure 2) et laisse entrer dans le circuit 1 une quantité d'air frais suffisante pour assurer la fonction de désembuage.

A titre d'exemple, les premiers et deuxièmes moyens d'actionnement 58 et 60 symbolisés par des traits mixtes au dessin peuvent respectivement comprendre un jeu de câbles, de cames et/ou de tringles ou tout autre moyen analogue (non représentés).

Dans l'exemple décrit, les moyens de liaison 60 du volet d'alimentation 40 sont agencés de manière que ce dernier est complètement ouvert lorsque le bouton de commande 56 est dans la position de désembuage, mais il va de soi que ces moyens de liaison 60 peuvent également être agencés de manière que le volet d'alimentation 40 occupe une des positions intermédiaires entre sa position complètement fermée et sa position complètement ouverte lorsque le bouton ce commande est dans la position de désembuage tout en réalisant une fonction de désembuage satisfaisante.

le panneau de commande 54 comporte en outre un deuxième bouton 62, indépendant du premier bouton de commande 56 de la répartition d'air dans l'habitacle 26, qui permet de régler la température de l'air introduit dans le véhicule via des moyens de liaison 64 symbolisés par un trait mixte. Le bouton 62 peut être actionné pour commander le chauffage ou le refroidissement de l'air entrant dans la zone de conditionnement 12. A cet effet des plages 66, 68 symbolisées sur le panneau 54 repèrent respectivement la commande de refroidissement et de chauffage. Il va de soi que le panneau 54 peut, le cas échéant, être complété par un bouton de commande (non représenté) du régime du ventilateur 10 pour régler le débit d'air circulant dans le circuit 1. Toutefois dans l'exemple décrit les moyens de liaison 64 du bouton 62 sont également utilisés pour commander le ventilateur 10.

Le principe de fonctionnement du circuit de conditionnement 1 de l'invention est le suivant:

Lorsque le bouton 56 est en regard du repère N (figure 1) le volet d'alimentation 40 est dans sa position fermée et le volet de répartition 28 est dans une position intermédiaire, horizontale au dessin. L'air circulant dans le conduit 8 provient pour 80% de l'habitacle 26 via le conduit 38 et pour 20% de l'extérieur du véhicule via les moyens de fuite 46. Cet air est mélangé par le ventilateur 10 et conduit vers la zone 12 où il est conditionné. L'air conditionné est alors réparti uniformément dans l'habitacle via les conduits 20, 22, et 24 pour ensuite être récupéré dans la zone 36 et redirigé vers la zone d'alimentation 4 via le conduit 38 pour un nouveau cycle avec un nouveau volume d'air frais entrant via les moyens de fuite 46. Dans cette configuration de la position des volets 40 et 28, le dispositif de l'invention fonctionne en mode de recyclage. A noter qu'une certaine partie de l'air circulant dans l'habitacle 26 s'en échappe régulièrement via les moyens d'évacuation 50.

Lorsque le bouton 56 est en regard du repère P (figure 3), le volet d'alimentation 40 est dans sa position fermée et le volet de répartition 28 est dans une position dans laquelle il obture les conduits 20 et 22. Le fonctionnement du dispositif est alors identique à celui décrit en liaison avec la figure 1 à la différence que l'air provenant de la zone 12 est dirigé vers la zone 34 des pieds des passagers.

Enfin, lorsque le bouton 56 est en regard du repère D (figure 2), le volet d'alimentation 40 est dans sa position ouverte et le volet de répartition 28 est dans une position dans laquelle il obture les conduits 22 et 24. Dans ce cas, la totalité du volume d'air à conditionner circulant dans le circuit 1 provient de l'extérieur. Une fois conditionné, l'air est alors dirigé directement dans la zone 30 via le conduit 20 à des fins de désembuage. L'orifice 42 du conduit 38 est fermé de façon étanche et la surpression créée dans l'habitacle 26 est supprimée par les moyens d'évacuation 50.

Le bouton principal 56 décrit précédemment permet donc d'actionner plusieurs fonctions, telles que les commandes d'ouverture et de fermeture du volet de répartition 28, tout en garantissant qu'en position de désembuage/dégivrage, l'air circulant dans l'habitacle 26 provient toujours de l'extérieur du véhicule, c'est-à-dire que le volet d'alimentation 40 est en position ouverte de sorte que l'utilisateur ne risque pas de mettre le circuit de conditionnement en mode de désembuage/dégivrage alors que ce circuit est encore en mode de recyclage. Il va de soi que le volet 40 peut être également commandé en liaison avec le volet 28 pour se trouver dans une position intermédiaire tout en assurant la fonction de désembuage désirée.

La réalisation proposée de ce dispositif de conditionnement est particulièrement simple et compacte, ce qui la rend fiable et peu coûteuse. Bien entendu, d'autres fonctions peuvent être ajoutées à ce dispositif de conditionnement, de même que des variantes de réalisation de ce dispositif peuvent envisagées par l'homme du métier pour autant que dans ces variantes le circuit de conditionnement dispose d'une zone d'alimentation en air extérieur et d'un conduit permettant la réintroduction d'air provenant de l'habitacle dans la zone de conditionnement. A titre d'exemple, le dispositif de conditionnement de l'invention peut être associé à un système de conditionnement d'air ou encore, les conduits de sortie de la chambre de répartition peuvent également être plus complexes et comprendre des conduits supplémentaires, tels des conduits dirigeant l'air vers les vitres latérales et/ou vers l'arrière du véhicule.

## Revendications

1. Dispositif de conditionnement d'air d'un habitacle (26) de véhicule automobile comportant un circuit de conditionnement d'air (1) et un mécanisme (2) comprenant des premiers moyens (56,60) pour actionner un volet d'alimentation (40) entre une première position dans laquelle l'air à conditionner fourni au circuit de conditionnement (1) provient de l'extérieur du véhicule, et une deuxième position dite de recyclage, dans laquelle l'air provenant dudit habitacle est réintroduit dans ledit circuit (1), et des deuxièmes moyens (56,58) pour actionner au moins un volet répartiteur (28) de l'air conditionné entre une première position dans laquelle l'air conditionné est transmis principalement à la zone (30) du pare-brise du véhicule, et au moins une deuxième position dans laquelle l'air conditionné est transmis à d'autres zones (32,34) de l'habitacle (26) du véhicule, ledit dispositif étant caractérisé en ce que lesdits premiers et deuxièmes moyens (56,58,60) sont couplés de manière que ledit volet d'alimentation (40) est toujours dans une position différente de sa deuxième position lorsque ledit volet répartiteur (28) est dans la première position.

2. Dispositif de conditionnement d'air selon la revendication 1, caractérisée en ce que ladite position différente dudit volet d'alimentation (40) est sa première position.

3. Dispositif de conditionnement d'air selon l'une des revendications précédentes, caractérisé en ce que le mécanisme de commande (2) comprend un bouton unique (56) pour assurer la commande du volet d'alimentation (40) et du volet de répartition (28).

4. Dispositif de conditionnement d'air selon l'une des revendications 1 à 3, caractérisé en ce que le volet d'alimentation (40) comporte des moyens de fuite (46) pour laisser entrer un débit déterminé d'air frais dans le circuit de conditionnement (1).

5. Dispositif de conditionnement d'air selon la revendication 4, caractérisée en ce que ledit débit déterminé correspond à environ 20 à 30% du flux d'air circulant dans le circuit de conditionnement (1).

6. Dispositif de conditionnement d'air selon l'une des revendications précédentes, caractérisé en ce que le circuit de conditionnement d'air (1) comprend une zone d'alimentation (43) en air dans laquelle est disposée le volet d'alimentation (40), une zone de conditionnement d'air (12) dans laquelle l'air peut être soit chauffé soit refroidi, une zone de répartition (16) de l'air conditionné dans l'habitacle (26) dans laquelle est disposé le volet répartiteur (28), une zone de récupération (36) de l'air située dans l'habitacle (26), et des moyens (38) pour amener l'air de ladite zone de récupération (36) à ladite zone d'alimentation (4).

7. Dispositif de conditionnement d'air selon la revendication 6, caractérisé en ce que ladite zone de récupération (36) est située dans une partie arrière inférieure de l'habitacle (26).

8. Dispositif de conditionnement d'air selon l'une des revendications précédentes, caractérisé en ce qu'il comprend, en outre, des moyens de commande (64) de régulation de la température de l'air fourni à l'habitacle (26).
